# EUROPÄISCHE PATENTSCHRIFT

(11) **EP 2 347 530 B1**
(45) Veröffentlichungstag und Bekanntmachung des Hinweises auf die Patenterteilung: **15.08.2012**
(21) Anmeldenummer: 09753037.2
(22) Anmeldetag: 09.11.2009
(51) Int. Cl.: H04B 10/10

(54) **INFRAROT-EMPFÄNGERSCHALTUNG**
INFRARED RECEIVER CIRCUIT
CIRCUIT RÉCEPTEUR INFRAROUGE

(30) Priorität: 26.11.2008 DE 102008058878
(43) Veröffentlichungstag der Anmeldung: 27.07.2011
(73) Patentinhaber: Vishay Semiconductor GmbH, 74072 Heilbronn (DE)
(72) Erfinder: FUCHS NUNES, Markus, 54329 Konz (DE)
(74) Vertreter: Manitz, Gerhart
(86) Internationale Anmeldenummer: PCT/EP2009/007997
(87) Internationale Veröffentlichungsnummer: WO 2010/060536

(56) Entgegenhaltungen:
- WO-A1-01/94899
- WO-A1-02/13403

## Beschreibung

Die vorliegende Erfindung betrifft eine Infrarot-Empfängerschaltung zum Empfangen eines trägermodulierten Infrarotsignals, das ein Trägersignal und ein auf das Trägersignal aufmoduliertes Nutzsignal umfasst, mit einem Bandpassfilter, der einen Frequenzeinstellanschluss aufweist, über den die Band-Mittenfrequenz des Bandpassfilters einstellbar ist, ferner mit einem Demodulator zur Rückgewinnung des Nutzsignals, und mit einem Signalausgang, an dem das demodulierte Nutzsignal ausgebbar ist.

Eine infrarot-Empfängerschaltung nach dem Stand der Technik ist aus der WO-A-01/94899 bekannt.

Zur Erzeugung des Infrarotsignals (IR-Signals) wird das Nutzsignal auf das Trägersignal aufmoduliert, beispielsweise unter Verwendung einer Amplitudenmodulation oder eines digitalen Modulationsverfahrens. Das Infrarotsignal kann beispielsweise von einer Fernbedienung abgesetzt werden und zur Steuerung eines Fernseh- oder DVD-Geräts (Digital Versatile Disk) dienen. Ein solches Gerät umfasst dann üblicherweise einen Infrarot-Empfänger mit einer Fotodiode, die das von der Fernbedienung ausgesendete Infrarotsignal empfängt und in elektrische Signale umwandelt, und mit einer Infrarot-Empfängerschaltung, die die elektrischen Signale in der Regel verstärkt, bandpassfiltert und anschließend demoduliert, so dass an dem Signalausgang der Infrarot-Empfängerschaltung das Nutzsignal ausgegeben werden kann.

In der EP 1 238 468 B1 ist ein derartiger Infrarot-Empfänger beispielhaft gezeigt.

Der Bandpassfilter ist dabei auf die Trägerfrequenz des Infrarotsignals abgestimmt, d.h. die Trägerfrequenz des Infrarotsignals liegt innerhalb des Durchlassfrequenzbands des Bandpassfilters, insbesondere entspricht die Band-Mittenfrequenz des Bandpassfilters der Trägerfrequenz des Infrarotsignals, so dass das in der Infrarot-Empfängerschaltung als elektrisches Signal vorliegende Infrarotsignal den Bandpassfilter ungehindert passieren kann. Störsignale hingegen, beispielsweise von Fremdlicht, die außerhalb des in der Regel engen Durchlassfrequenzbands liegen, werden gesperrt.

Üblicherweise handelt es sich bei einem derartigen Bandpassfilter um einen stimmbaren Bandpassfilter, der über einen Frequenzeinstellanschluss von einem Taktgeber der Infrarot-Empfängerschaltung ansteuerbar ist, wobei die Band-Mittelfrequenz des Bandfilters von der Taktfrequenz des Taktgebers abhängt. Ein derartiger Bandpassfilter kann beispielsweise durch einen Switched-Capacitor-Filter (SC-Filter) realisiert sein.

Bei der Herstellung der Infrarot-Empfängerschaltung, die üblicherweise als Halbleiterschaltung realisiert ist, ist es daher möglich, für den Bandpassfilter eine von mehreren Band-Mittenfrequenzen (beispielsweise 30,3 kHz, 33 kHz, 36 kHz, 36,7 kHz, 38 kHz, 40 kHz, 44 kHz oder 56 kHz) auszuwählen. Hierzu muss die entsprechende Taktfrequenz des Taktgebers ausgewählt werden, wobei in der Regel zusätzlich noch eine Feinjustierung der gewählten Taktfrequenz erforderlich ist, um eine gewünschte Frequenzgenauigkeit zu erreichen. Dies kann beispielsweise durch bekannte Maßnahmen wie Fusing erreicht werden.

Die Auswahl einer Band-Mittenfrequenz sowie deren Feinjustierung, in der Regel auf Wafer-Level, ist jedoch zeit- und kostenintensiv.

Aufgabe der Erfindung ist es, eine Infrarot-Empfängerschaltung der eingangs genannten Art zu schaffen, die kostengünstiger herstellbar ist.

Diese Aufgabe wird durch eine Infrarot-Empfängerschaltung mit den Merkmalen des Anspruchs 1 gelöst, und insbesondere dadurch, dass die Infrarot-Empfängerschaltung einen Signaleingang aufweist, der zumindest indirekt mit dem Frequenzeinstellanschluss des Bandpassfilters verbunden ist, so dass die Band-Mittenfrequenz des Bandpassfilters durch ein Taktsignal eines externen Taktgebers einstellbar ist.

Die Infrarot-Empfängerschaltung ist also derart ausgebildet, dass es möglich ist, das Taktsignal eines externen Taktgebers für die Einstellung der Band-Mittenfrequenz des Bandpassfilters zu verwenden. Das vorstehend in Zusammenhang mit dem Stand der Technik beschriebene Auswählen und Feinjustieren der Taktfrequenz eines internen Taktgebers bei der Herstellung der Infrarot-Empfängerschaltung kann daher entfallen. Stattdessen wird die Band-Mittenfrequenz des Bandpassfilters auf die Frequenz eines externen Taktsignals gestimmt.

Bei dem externen Taktgeber kann es sich beispielsweise um einen Mikrocontroller handeln, der in einer Vorrichtung, in der ein Infrarot-Empfänger mit der erfindungsgemäßen Infrarot-Empfängerschaltung eingesetzt ist, beispielsweise einem Fernseh- oder DVD-Gerät, ohnehin enthalten ist. Zur Realisierung der Erfindung kann daher sogar auf einen eigenen Taktgeber der Infrarot-Empfängerschaltung verzichtet werden. Darüber hinaus ist ein von einem derartigen Mikrocontroller zur Verfügung gestelltes Taktsignal üblicherweise sehr präzise, so dass die Band-Mittenfrequenz der Infrarot-Empfängerschaltung mit einer hohen Genauigkeit festgelegt werden kann. Grundsätzlich kann jedoch auch ein anderer externer Taktgeber verwendet werden.

Gemäß einer Ausbildung der Erfindung ist der Signaleingang durch den Signalausgang gebildet. Dies hat den Vorteil, dass für das Einspeisen des externen Taktsignals kein separater Eingang erforderlich ist. Sofern der vorgenannte Mikrocontroller als externer Taktgeber verwendet wird, ist darüber hinaus auch keine separate Leitung erforderlich, um das Taktsignal von dem Mikrocontroller zu der Infrarot-Empfängerschaltung zu übertragen. Vielmehr kann hierzu dann diejenige Leitung verwendet werden, die das ausgegebene demodulierte Nutzsignal von der Infrarot-Empfängerschaltung zu dem Mikrocontroller überträgt.

Der Signaleingang kann jedoch auch separat von dem Signalausgang ausgebildet sein. Gegenüber aus dem Stand der Technik bekannten Infrarot-Empfängerschaltungen ist dann zwar eine separate Leitung erforderlich, welche im Vergleich zu der sonstigen Kostenersparnis durch die vorliegende Erfindung jedoch nicht wesentlich ins Gewicht fällt. Insbesondere kann der Signaleingang unmittelbar mit dem Bandpassfilter verbunden sein, in welchem Fall das Taktsignal des externen Taktgenerators der Infrarot-Empfängerschaltung dann bevorzugt kontinuierlich zugeführt wird.

Nach einer anderen Ausbildung der Erfindung ist innerhalb der Infrarot-Empfängerschaltung ein zwischen dem Signaleingang und dem Bandpassfilter angeordneter elektrischer Schwingungserzeuger vorgesehen, wobei der Schwingungserzeuger dazu ausgebildet ist, ein Frequenzeinstellsignal für den Bandpassfilter mit der Frequenz des externen Taktsignals zu erzeugen, wenn das externe Taktsignal an dem Schwingungserzeuger anliegt. Bei dem Schwingungserzeuger kann es sich beispielsweise um eine Phase-Locked-Loop-Einrichtung (PLL) handeln.

Dabei ist es bevorzugt, wenn der Schwingungserzeuger dazu ausgebildet ist, das Frequenzeinstellsignal mit der externen Taktfrequenz auch dann noch zu erzeugen, wenn das externe Taktsignal anschließend unterbrochen ist oder entfällt. Mit anderen Worten umfasst der interne Schwingungserzeuger also Mittel, die es ermöglichen, das zuvor gelieferte externe Taktsignal "einzufrieren". Dies kann beispielsweise dann erforderlich sein, wenn der Signaleingang durch den Signalausgang gebildet ist und das Taktsignal durch das Nutzsignal zerstört wird, so dass das externe Taktsignal zeitweise unterbrochen ist, oder wenn das Taktsignal lediglich für einen Initialisierungszeitabschnitt zur Verfügung steht und danach entfällt.

Der interne Schwingungserzeuger kann dazu ausgebildet sein, zu erkennen, wann das externe Taktsignal unterbrochen ist. Insbesondere kann ein Ausgang des Demodulators mit einem Eingang des Schwingungserzeugers verbunden sein, wobei der Schwingungserzeuger dazu ausgebildet ist, anhand des demodulierten Nutzsignals zu erkennen, wann das externe Taktsignal unterbrochen ist. Der Schwingungserzeuger kann dann selbst entscheiden, zu welchem Zeitpunkt das externe Taktsignal "eingefroren" werden soll, um zu verhindern, dass an den Bandpassfilter ein Nullsignal ausgegeben wird, welches einem fehlenden externen Taktsignal entspricht.

Insbesondere sofern das externe Taktsignal nicht kontinuierlich zur Verfügung gestellt werden kann oder soll, beispielsweise um den vorgenannten Mikrocontroller zu entlasten, ist es bevorzugt, wenn der interne Schwingungserzeuger dazu ausgebildet ist, während eines Initialisierungszeitabschnitts, in dem das externe Taktsignal an dem Schwingungserzeuger anliegt, das Frequenzeinstellsignal für den Bandpassfilter auf die externe Taktfrequenz zu synchronisieren, d.h. zu stimmen. Nach dem Initialisierungszeitabschnitt, wenn das externe Taktsignal dann für den weiteren Betrieb entfällt, kann das dann "eingefrorene", synchronisierte Frequenzeinstellsignal auch weiterhin an den Bandpassfilter ausgegeben werden.

Vorzugsweise ist die Taktfrequenz des externen Taktsignals von einem ganzzahligen Vielfachen der Band-Mittelfrequenz des Bandpassfilters und/oder der Trägerfrequenz des Infrarotsignals verschieden, um durch die Einkopplung des externen Taktsignals bedingte Störeinflüsse auf die Infrarot-Empfängerschaltung möglichst zu vermeiden.

Bevorzugt ist der Bandpassfilter als Switched-Capacitor-Filter ausgebildet.

Die Erfindung betrifft weiterhin eine Vorrichtung, beispielsweise ein Fernseh- oder DVD-Gerät, umfassend einen Infrarot-Empfänger mit einer Infrarot-Empfängerschaltung, wie sie vorstehend beschrieben ist, und einen mit der Infrarot-Empfängerschaltung gekoppelten externen Taktgeber, insbesondere einen Mikrocontroller.

Sofern bei der Infrarot-Empfängerschaltung der Signaleingang durch den Signalausgang gebildet ist, kann der externe Taktgeber Mittel umfassen, die dazu ausgebildet sind, aus dem mit dem externen Taktsignal überlagerten, von dem Infrarot-Empfänger ausgegebenen demodulierten Nutzsignal das demodulierte Nutzsignal zu extrahieren. Die Mittel können als Software und/oder Hardware ausgebildet sein.

Die Erfindung betrifft weiterhin ein Verfahren zum Verarbeiten eines trägermodulierten Infrarotsignals, das ein Trägersignal und ein auf das Trägersignal aufmoduliertes Nutzsignal umfasst, mittels einer Infrarot-Empfängerschaltung, bei dem die Band-Mittenfrequenz eines Bandpassfilters durch ein Taktsignal eines externen Taktgenerators eingestellt wird.

Weiterbildungen des erfindungsgemäßen Verfahrens ergeben sich in analoger Weise aus den erläuterten Weiterbildungen der erfindungsgemäßen Infrarot-Empfängerschaltung.

Weitere vorteilhafte Ausgestaltungen der Erfindung sind in der nachfolgenden Figurenbeschreibung, der Zeichnung und den Unteransprüchen angegeben.

Die Erfindung wird nachfolgend lediglich beispielhaft anhand der Zeichnung erläutert. In dieser zeigen:
- Fig. 1: ein Blockschaltbild einer ersten Ausführungsform eines erfindungsgemäßen, mit einem Mikrocontroller gekoppelten Infrarot-Empfängers,
- Fig. 2: ein Blockschaltbild einer zweiten Ausführungsform eines erfindungsgemäßen, mit einem Mikrocontroller gekoppelten Infrarot-Empfängers, und
- Fig. 3: Pulsdiagramme, die an verschiedenen Punkten der aus dem Infrarot-Empfänger und dem Mikrocontroller bestehenden Vorrichtung gemäß Fig. 2 vorliegende Schaltzustände darstellen.

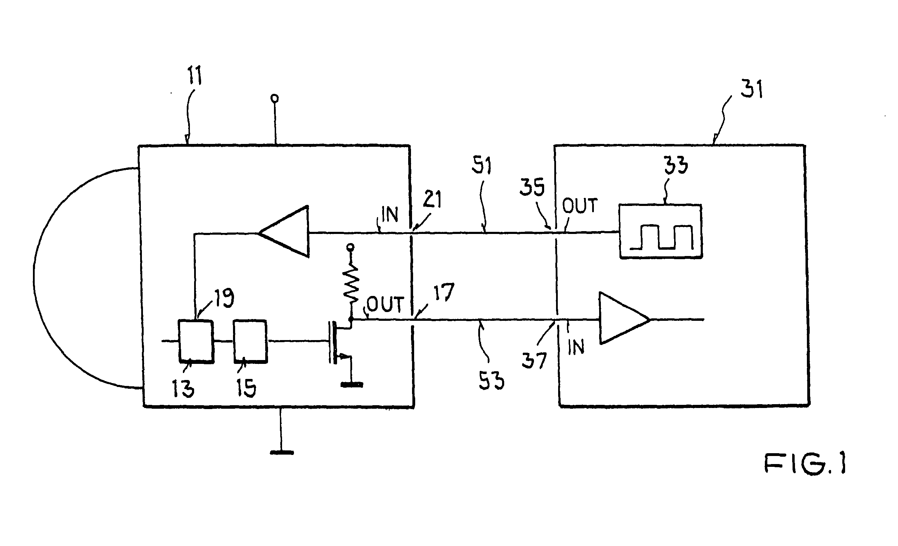

Der in Fig. 1 gezeigte Infrarot-Empfänger 11 kann grundsätzlich beispielsweise den in EP 1 238 468 B 1 beschriebenen Aufbau und die dort beschriebene Funktionsweise besitzen. Der Infrarot-Empfänger 11 umfasst daher eine nicht dargestellte Fotodiode zum Empfangen eines trägermodulierten Infrarotsignals, das ein Trägersignal und ein auf das Trägersignal aufmoduliertes Nutzsignal umfasst, und eine nur teilweise dargestellte Infrarot-Empfängerschaltung.

Die Infrarot-Empfängerschaltung umfasst eine nicht dargestellte Verstärkerschaltung zum Verstärken des von der Fotodiode in ein elektrisches Signal umgewandelten Infrarotsignals, ferner einen auf die Trägerfrequenz des Infrarotsignals abgestimmten Bandpassfilter 13, um das empfangene Infrarotsignal von Störsignalen zu trennen, ferner einen Demodulator 15, um das Nutzsignal aus dem gefilterten Infrarotsignal zurückzugewinnen, und einen Signalausgang 17, an dem das demodulierte Nutzsignal ausgebbar ist.

Der Bandpassfilter 13 ist als ein Switched-Capacitor-Filter ausgebildet, so dass die Band-Mittenfrequenz des Bandpassfilters 13 von der Frequenz eines periodischen Taktsignals abhängig ist, welches dem Bandpassfilter 13 zugeführt wird. Hierfür weist der Bandpassfilter 13 einen Frequenzeinstellanschluss 19 auf.

Bei aus dem Stand der Technik bekannten Infrarot-Empfängerschaltungen, die üblicherweise als Halbleiterbauelemente ausgebildet sind, wird dieses Taktsignal originär von einem internen Taktgeber zur Verfügung gestellt. Da herstellungsbedingt zumindest geringfügige Abweichungen in den elektrischen Eigenschaften der internen Taktgeber auftreten, muss beim Testen der Infrarot-Empfängerschaltung, und damit vor deren Auslieferung, der interne Taktgeber in der Regel auf die gewünschte Taktfrequenz nachjustiert werden. Hiermit sind nicht zu vernachlässigende Kosten verbunden.

Der Infrarot-Empfänger 11 gemäß Fig. 1 hingegen weist einen Signaleingang 21 auf, der direkt mit dem Frequenzeinstellanschluss 19 des Bandpassfilters 13 verbunden ist. Über den Signaleingang 21 kann dem Bandpassfilter 13 das in der Regel sehr präzise Taktsignal eines externen Taktgebers 31, in dem vorliegenden Fall eines Mikrocontrollers, zur Verfügung gestellt werden. Die Band-Mittenfrequenz des Bandpassfilters 13 ist daher durch den externen Taktgeber 31 einstellbar.

Das externe Taktsignal wird von einem Abschnitt 33 des externen Taktgebers 31 bereitgestellt, der mit einem Signalausgang 35 des externen Taktgebers 31 verbunden ist. Der Abschnitt 33 des externen Taktgebers 31 kann beispielsweise dazu ausgelegt sein, das Taktsignal aus einer Frequenzreferenz abzuleiten, die ein Mikrocontroller ohnehin besitzt, z.B. aus der Frequenz eines internen oder externen Quarzes. Alternativ kann aber auch per Software eine Leitung getoggelt werden, oder das Taktsignal kann mit einem auf dem Mikrocontroller integrierten Zähler erzeugt werden. Zur Übermittlung des von dem Taktgeber-Abschnitt 33 erzeugten Taktsignals an den Infrarot-Empfänger 11 sind der Signalausgang 35 des externen Taktgebers 31 und der Signaleingang 21 des Infrarot-Empfängers 11 über eine Leitung 51 miteinander verbunden. Darüber hinaus weist der externe Taktgeber 31 einen Signaleingang 37, um das an dem Signalausgang 17 des Infrarot-Empfängers 11 ausgegebene demodulierte Nutzsignal zu empfangen, wobei der Signalausgangs 17 des Infrarot-Empfängers 11 und der Signaleingang 37 des externen Taktgebers 31 über eine Leitung 53 miteinander verbunden sind.

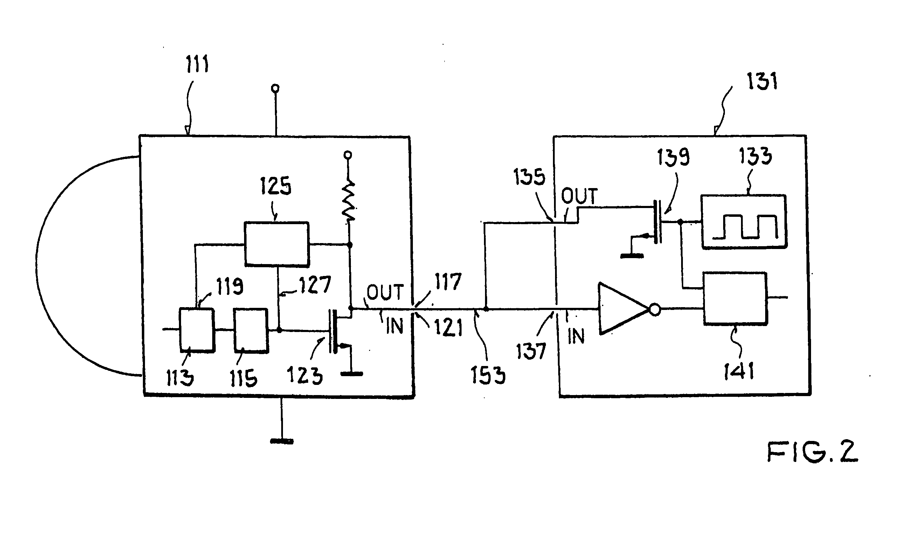

Bei dem Infrarot-Empfänger 11 gemäß Fig. 1 ist der Signaleingang 21 also separat von dem Signalausgang 17 ausgebildet. Hierin unterscheidet sich der Infrarot-Empfänger 111 gemäß Fig. 2 von dem Infrarot-Empfänger 11 gemäß Fig. 1.

In Fig. 2 sind die Bezugszeichen gegenüber den entsprechenden Elementen gemäß Fig. 1 um 100 erhöht. Bei dem Infrarot-Empfänger 111 gemäß Fig. 2 ist der Signaleingang 121 durch den Signalausgang 117 gebildet. Der Signalausgang 117 wird also zusätzlich zum Ausgeben des demodulierten Nutzsignals auch zum Empfangen des externen Taktsignals verwendet. Zwischen dem Infrarot-Empfänger 111 und dem externen Taktgeber 131 ist nur eine einzige Leitung 153 vorhanden.

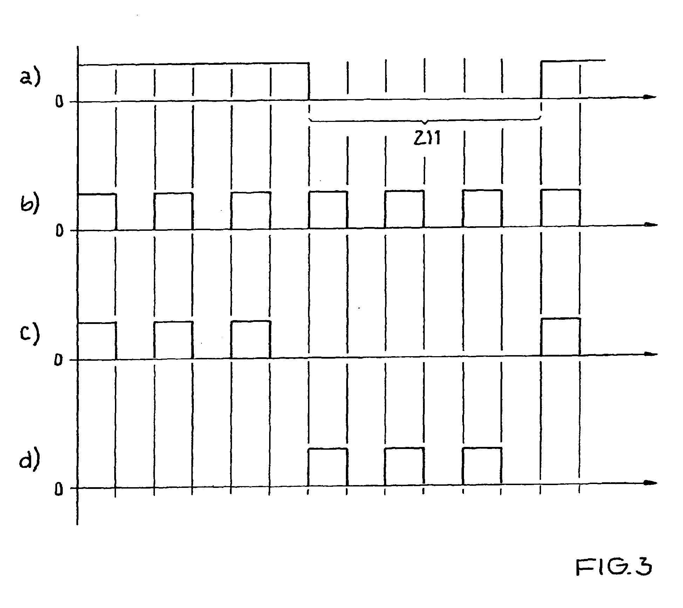

Hierdurch sind weitere Änderungen des Infrarot-Empfängers 111 gemäß Fig. 2 gegenüber dem Infrarot-Empfänger 11 gemäß Fig. 1 erforderlich, wie aus Fig. 3 deutlich wird.

Fig. 3a zeigt das Nutzsignal 211 des Infrarot-Empfängers 111, bevor es mittels eines Open-Collector-Ausgangs oder Open-Drain-Ausgangs 123 über den Signalausgang 117 auf die Leitung 153 gegeben wird. Fig. 3b zeigt das Taktsignal des Abschnitts 133 des externen Taktgebers 131, bevor es mittels eines Open-Collector-Ausgangs oder Open-Drain-Ausgangs 139 über den Signalausgang 135 auf die Leitung 153 gegeben wird. Letztlich sind das Nutzsignal 211 und das Taktsignal miteinander UND-verknüpft, so dass auf der Leitung 153 insgesamt das in Fig. 3c gezeigte Signal anliegt.

Während das Nutzsignal 211 ausgegeben wird, wird die Leitung 153 also auf Masse (Null-Potential) gezogen, so dass das Taktsignal des externen Taktgebers 131 den Infrarot-Empfänger 111 nicht mehr erreichen kann. Damit während dieser Zeit das Taktsignal dem Frequenzeinstellanschluss 119 des Bandpassfilters 113 trotzdem bereitgestellt werden kann, umfasst die Infrarot-Empfängerschaltung eine Phase-lock Loop (PLL) 125, die dazu ausgebildet ist, ein Frequenzeinstellsignal mit der Taktfrequenz des zuvor noch empfangene Taktsignal weiterhin an den Bandpassfilter 113 auszugeben. Über eine direkte Verbindung 127 zwischen dem Demodulator 115 und der PLL 125 kann die PLL 125 feststellen, wann genau das Empfangen des externen Taktsignals unterbrochen ist.

Darüber hinaus ist der externe Taktgeber 131 dazu in der Lage, die Ausgabe des Nutzsignals 211 trotz dessen Überlagerung mit dem Taktsignal zu erkennen. Hierzu umfasst der externe Taktgeber 131 entsprechende Mittel 141. Die Mittel 141 können vielfältiger Natur sein.

Beispielsweise können die Mittel 141 als Software realisiert sein. Insbesondere kann der externe Taktgeber 131 jedes Mal, wenn das Taktsignal des Taktgeber-Abschnitts 133 auf HIGH ist, den Zustand der Leitung 153 überprüfen. Wenn dieser Zustand dann LOW ist, wird der Status "Infrarot-Empfänger aktiv" aktiviert. Dieser Status bleibt dann solange erhalten, bis bei einer derartigen Überprüfung wieder der Zustand HIGH detektiert wird.

Alternativ kann das Taktsignal gemäß Fig. 3b mit einem zu Fig. 3c inversen Signal UND-verknüpft werden, wodurch das Signal gemäß Fig. 3d resultiert. Sobald das Signal gemäß Fig. 3d einen HIGH-Zustand einnimmt, wird ein Interrupt-Eingang des externen Taktgebers 131 getriggert, um den Status "Infrarot-Empfänger aktiv" zu aktivieren. Gleichzeitig beginnt ein Zähler zu laufen, der nach Deaktivierung des Interrupts herunterzählt. Wenn der Zähler Null erreicht, d.h. in vorgegebener Zeit kein Interrupt mehr auftritt, wird der Status "Infrarot-Empfänger aktiv" wieder deaktiviert. Sofern hierbei am Anfang oder Ende des Nutzsignals 211 ein oder mehrere Takte verloren gehen, ist dies im Allgemeinen nicht kritisch, da eine gewisse Toleranz hinsichtlich des Nutzsignals 211 erlaubt ist. Weiter alternativ kann das Signal gemäß Fig. 3d dupliziert und das duplizierte Signal um einen halben Takt des Taktgeber-Abschnitts 133 phasenverschoben werden, und das Signal gemäß Fig. 3d mit dem phasenverschobenen Signal UND-verknüpft werden, um ein zu dem Nutzsignal 211 inverses Signal zu gewinnen.

Bei den in den Fig. 1 und 2 gezeigten Ausführungsformen wird das Taktsignal des externen Taktgebers 31, 131 den Infrarot-Empfängern 11, 111 kontinuierlich zugeführt.

In beiden Fällen ist es jedoch auch möglich, dass der Infrarot-Empfänger eine PLL-Einrichtung oder dergleichen enthält, die sich während eines Initialisierungszeitabschnitts, beispielsweise beim Einschalten des vorgenannten Fernseh- oder DVD-Geräts, auf die externe Taktfrequenz synchronisiert. Das externe Taktsignal muss in diesem Fall dann nur für die Dauer des Initialisierungszeitabschnitts am Infrarot-Empfänger anliegen.

Der erfindungsgemäße Infrarot-Empfänger ermöglicht auf einfache Weise, das kostenintensive Tunen eines internen Taktgebers bzw. des Bandpassfilters zu vermeiden.

### Bezugszeichenliste

- 11: Infrarot-Empfänger
- 13: Bandpassfilter
- 15: Demodulator
- 17: Signalausgang
- 19: Frequenzeinstellanschluss
- 21: Signaleingang
- 31: externer Taktgeber
- 33: Abschnitt
- 35: Signalausgang
- 37: Signaleingang
- 51: Leitung
- 53: Leitung
- 111: Infrarot-Empfänger
- 113: Bandpassfilter
- 115: Demodulator
- 117: Signalausgang
- 119: Frequenzeinstellanschluss
- 121: Signaleingang
- 123: Open-Collector-Ausgang oder Open-Drain-Ausgang
- 125: Phase-locked Loop
- 127: Leitung
- 131: externer Taktgeber
- 133: Abschnitt
- 135: Signalausgang
- 137: Signaleingang
- 139: Open-Collector-Ausgang oder Open-Drain-Ausgang
- 141: Mittel zum Rückgewinnen des Nutzsignals
- 211: Nutzsignal

## Patentansprüche

1. Infrarot-Empfängerschaltung zum Empfangen eines trägermodulierten Infrarotsignals, das ein Trägersignal und ein auf das Trägersignal aufmoduliertes Nutzsignal (211) umfasst, mit einem Bandpassfilter (13, 113), der einen Frequenzeinstellanschluss (19, 119) aufweist, über den die Band-Mittenfrequenz des Bandpassfilters (13, 113) einstellbar ist, ferner mit einem Demodulator (15, 115) zur Rückgewinnung des Nutzsignals (211), und mit einem Signalausgang (17, 117), an dem das demodulierte Nutzsignal (211) ausgebbar ist,
dadurchgekennzeichnet,
dass die Infrarot-Empfängerschaltung (11, 111) einen Signaleingang (21, 121) aufweist, der zumindest indirekt mit dem Frequenzeinstellanschluss (19, 119) des Bandpassfilters (13, 113) verbunden ist, so dass die Band-Mittenfrequenz des Bandpassfilters (13, 113) durch ein Taktsignal eines externen Taktgebers (31, 131) einstellbar ist.

2. Infrarot-Empfängerschaltung nach Anspruch 1,
**dadurch gekennzeichnet,**
**dass** der Signaleingang (121) durch den Signalausgang (117) gebildet ist.

3. Infrarot-Empfängerschaltung nach Anspruch 1,
**dadurch gekennzeichnet,**
**dass** der Signaleingang (21) separat von dem Signalausgang (17) ausgebildet ist.

4. Infrarot-Empfängerschaltung nach Anspruch 3,
**dadurch gekennzeichnet,**
**dass** der Signaleingang (21) unmittelbar mit dem Bandpassfilter (13) verbunden ist.

5. Infrarot-Empfängerschaltung nach Anspruch 2 oder 3,
**dadurch gekennzeichnet,**
**dass** ein zwischen dem Signaleingang (121) und dem Bandpassfilter (113) angeordneter elektrischer Schwingungserzeuger (125) vorgesehen ist, wobei der Schwingungserzeuger (125) dazu ausgebildet ist, ein Frequenzeinstellsignal für den Bandpassfilter (113) gemäß dem Taktsignal des externen Taktgebers (31, 131) zu erzeugen.

6. Infrarot-Empfängerschaltung nach Anspruch 5,
**dadurch gekennzeichnet,**
**dass** der Schwingungserzeuger (125) dazu ausgebildet ist, das Frequenzeinstellsignal gemäß dem externen Taktsignal auch dann noch zu erzeugen, wenn das externe Taktsignal unterbrochen ist oder entfällt.

7. Infrarot-Empfängerschaltung nach Anspruch 6,
**dadurch gekennzeichnet,**
**dass** der Schwingungserzeuger (125) dazu ausgebildet ist, zu erkennen, wann das externe Taktsignal unterbrochen ist.

8. Infrarot-Empfängerschaltung nach Anspruch 6 oder 7,
**dadurch gekennzeichnet,**
**dass** der Demodulator (115) mit dem Schwingungserzeuger (125) verbunden ist, wobei der Schwingungserzeuger (125) dazu ausgebildet ist, anhand des demodulierten Nutzsignals (211) zu erkennen, wann das externe Taktsignal unterbrochen ist.

9. Infrarot-Empfängerschaltung nach zumindest einem der Ansprüche 5 bis 8,
**dadurch gekennzeichnet,**
**dass** der Schwingungserzeuger (125) dazu ausgebildet ist, während eines Initialisierungszeitabschnitts, in dem das externe Taktsignal an dem Schwingungserzeuger (125) anliegt, das Frequenzeinstellsignal für den Bandpassfilter (13, 113) auf das externe Taktsignal zu synchronisieren.

10. Infrarot-Empfängerschaltung nach zumindest einem der vorstehenden Ansprüche,
**dadurch gekennzeichnet,**
**dass** die Taktfrequenz des externen Taktsignals von einem ganzzahligen Vielfachen der Band-Mittelfrequenz des Bandpassfilters (13, 113) verschieden ist.

11. Infrarot-Empfängerschaltung nach zumindest einem der vorstehenden Ansprüche,
**dadurch gekennzeichnet,**
**dass** der Bandpassfilter (13, 113) als Switched-Capacitor-Filter ausgebildet ist.

12. Vorrichtung, beispielsweise Fernseh- oder DVD-Gerät, umfassend einen Infrarot-Empfänger mit einer Infrarot-Empfängerschaltung (11, 111) nach zumindest einem der vorstehenden Ansprüche und einen mit der Infrarot-Empfängerschaltung (11, 111) gekoppelten externen Taktgeber (31, 131), insbesondere einen Mikrocontroller.

13. Vorrichtung nach Anspruch 12,
**dadurch gekennzeichnet,**
**dass** bei der Infrarot-Empfängerschaltung (11, 111) der Signaleingang (21, 121) durch den Signalausgang (17, 117) gebildet ist und der externe Taktgeber (31, 131) Mittel (141) umfasst, die dazu ausgebildet sind, aus dem demodulierten Nutzsignal (211), das an dem Signalausgang (17, 117) der Infrarot-Empfängerschaltung (11, 111) anliegt und dem das externe Taktsignal überlagert ist, das demodulierte Nutzsignal (211) zu extrahieren.

14. Verfahren zum Verarbeiten eines trägermodulierten Infrarotsignals, das ein Trägersignal und ein auf das Trägersignal aufmoduliertes Nutzsignal (211) umfasst, mittels einer Infrarot-Empfängerschaltung (11, 111), bei dem die Band-Mittenfrequenz eines Bandpassfilters (13, 113) durch ein Taktsignal eines externen Taktgenerators (31, 131) eingestellt wird.

## Claims

1. An infrared receiver circuit for the reception of a carrier modulated infrared signal which includes a carrier signal and a wanted signal (211) modulated onto the carrier signal, with a bandpass filter (13, 113) which has a frequency setting terminal (19, 119) via which the center frequency of the band of the bandpass filter (13, 113) can be set, furthermore with a demodulator (15, 115) for the recovery of the wanted signal (211) and with a signal output (17, 117) at which the demodulated wanted signal (211) can be output,
**characterized in that**
the infrared receiver circuit (11, 111) has a signal input (21, 121) which is connected at least indirectly to the frequency setting terminal (19, 119) of the bandpass filter (13, 113) so that the center frequency of the band of the bandpass filter (13, 113) can be set by a clock pulse signal of an external clock pulse generator (31, 131).

2. An infrared receiver circuit in accordance with claim 1, **characterized in that** the signal input (121) is formed by the signal output (117).

3. An infrared receiver circuit in accordance with claim 1, **characterized in that** the signal input (21) is made separately from the signal output (17).

4. An infrared receiver circuit in accordance with claim 3, **characterized in that** the signal input (21) is directly connected to the bandpass filter (13).

5. An infrared receiver circuit in accordance with claim 2 or claim 3, **characterized in that** an electrical oscillator (125) arranged between the signal input (121) and the bandpass filter (113) is provided, with the oscillator (125) being made to generate a frequency setting signal for the bandpass filter (113) in accordance with the clock pulse signal of the external clock pulse generator (31, 131).

6. An infrared receiver circuit in accordance with claim 5, **characterized in that** the oscillator (125) is made also still to generate the frequency setting signal in accordance with the external clock pulse signal when the external clock pulse signal is interrupted or is omitted.

7. An infrared receiver circuit in accordance with claim 6, **characterized in that** the oscillator (125) is made to recognize when the external clock pulse signal is interrupted.

8. An infrared receiver circuit in accordance with claim 6 or claim 7, **characterized in that** the demodulator (115) is connected to the oscillator (125), with the oscillator (125) being made to recognize with reference to the demodulated wanted signal (211) when the external clock pulse signal is interrupted.

9. An infrared receiver circuit in accordance with at least one of the claims 5 to 8, **characterized in that** the oscillator (125) is made to synchronize the frequency setting signal for the bandpass filter (13, 113) to the external clock pulse signal during an initialization time period in which the external clock pulse signal is applied to the oscillator (125).

10. An infrared receiver circuit in accordance with at least one of the preceding claims, **characterized in that** the clock pulse frequency of the external clock pulse signal is different from a whole number multiple of the center frequency of the band of the bandpass filter (13, 113).

11. An infrared receiver circuit in accordance with at least one of the preceding claims, **characterized in that** the bandpass filter (13, 113 is made as a switched capacitor filter.

12. A device, for example a TV set or a DVD unit, including an infrared receiver with an infrared receiver circuit (11, 111) in accordance with at least one of the preceding claims, and including an external clock pulse generator (13, 131), in particular a microcontroller, coupled to the infrared receiver circuit (11, 111).

13. A device in accordance with claim 12, **characterized in that**, in the infrared receiver circuit (11, 111), the signal input (21, 121) is formed by the signal output (17, 117) and the external clock pulse generator (31, 131) includes means (141) which are made to extract the demodulated wanted signal (211) from the demodulated wanted signal (211) which is applied to the signal output (17, 117) of the infrared receiver circuit (11, 111) and on which the external clock pulse signal is superimposed.

14. A method for the processing of a carrier modulated infrared signal, which includes a carrier signal and a wanted signal (211) modulated onto the carrier signal, by means of an infrared receiver circuit (11, 111) in which the center frequency of the band of a bandpass filter (13, 113) is set by a clock pulse signal of an external clock pulse generator (31, 131).

## Revendications

1. Circuit récepteur infrarouge pour recevoir un signal infrarouge modulé sur porteur, qui comprend un signal porteur et un signal utile (211) modulé en superposition sur le signal porteur, comprenant un filtre passe-bande (13, 113) qui comprend une borne d'ajustement de fréquence (19, 119) au moyen de laquelle la fréquence du milieu de bande du filtre passe-bande (13, 113) peut être ajustée, comprenant en outre un démodulateur (15, 115) pour récupérer le signal utile (211), et comprenant une sortie de signal (17, 117) à laquelle le signal utile démodulé (211) peut être sorti,
**caractérisé en ce que**
le circuit récepteur infrarouge (11, 111) comprend une entrée de signal (21, 121), qui est reliée au moins indirectement à la borne d'ajustement de fréquence (19, 119) du filtre passe-bande (13, 113), de sorte que la fréquence du milieu de bande du filtre passe-bande (13, 113) peut être ajustée par un signal de cadence d'une horloge externe (31, 131).

2. Circuit récepteur infrarouge selon la revendication 1,
**caractérisé en ce que** l'entrée de signal (121) est formée par la sortie de signal (117).

3. Circuit récepteur infrarouge selon la revendication 1,
**caractérisé en ce que** l'entrée de signal (21) est réalisée séparément de la sortie de signal (17).

4. Circuit récepteur infrarouge selon la revendication 3,
**caractérisé en ce que** l'entrée de signal (21) est connectée directement avec le filtre passe-bande (13).

5. Circuit récepteur infrarouge selon la revendication 2 ou 3,
**caractérisé en ce qu'**il est prévu un générateur d'oscillations électrique (125) agencé entre l'entrée de signal (121) et le filtre passe-bande (113), ledit générateur d'oscillation (125) étant réalisé pour générer un signal d'ajustement de fréquence pour le filtre passe-bande (113) suivant le signal de cadence de l'horloge externe (31, 131).

6. Circuit récepteur infrarouge selon la revendication 5,
**caractérisé en ce que** le générateur d'oscillations (125) est réalisé pour générer le signal d'ajustement de fréquence suivant le signal de cadence externe également quand le signal de cadence externe est interrompu ou disparaît.

7. Circuit récepteur infrarouge selon la revendication 6,
**caractérisé en ce que** le générateur d'oscillations (125) est réalisé pour reconnaître quand le signal de cadence externe est interrompu.

8. Circuit récepteur infrarouge selon la revendication 6 ou 7,
**caractérisé en ce que** le démodulateur (115) est connecté au générateur d'oscillations (125), et le générateur d'oscillations (125) est réalisé pour reconnaître, au moyen du signal utile démodulé (211), quand le signal de cadence externe est interrompu.

9. Circuit récepteur infrarouge selon l'une au moins des revendications 5 à 8,
**caractérisé en ce que** le générateur d'oscillations (125) est réalisé, pendant un intervalle temporel d'initialisation dans lequel le signal de cadence externe est appliqué au générateur d'oscillations (125), pour synchroniser le signal d'ajustement de fréquence pour le filtre passe-bande (13, 113) sur le signal de cadence externe.

10. Circuit récepteur infrarouge selon l'une au moins des revendications précédentes,
**caractérisé en ce que** la fréquence de cadence du signal de cadence externe est différente d'un multiple entier de la fréquence du milieu de bande du filtre passe-bande (13, 113).

11. Circuit récepteur infrarouge selon l'une au moins des revendications précédentes,
**caractérisé en ce que** le filtre passe-bande (13, 113) est réalisé sous forme de filtre à capacité commutée (Switched-Capacity-Filter).

12. Appareil, par exemple téléviseur ou appareil de lecture de DVD, comprenant un récepteur infrarouge avec un circuit récepteur infrarouge (11, 111) selon l'une au moins des revendications précédentes et une horloge externe (31, 131) couplée au circuit récepteur infrarouge (11, 111), en particulier un microcontrôleur.

13. Appareil selon la revendication 12,
**caractérisé en ce que** dans le circuit récepteur infrarouge (11, 111), l'entrée de signal (21, 121) est formée par la sortie de signal (17, 117), et l'horloge externe (31, 131) comprend des moyens (141) qui sont réalisés pour extraire le signal utile démodulé (111) à partir du signal externe démodulé (211) qui est appliqué à la sortie de signal (17, 117) du circuit récepteur infrarouge (11, 111) et sur lequel est superposé le signal de cadence externe.

14. Procédé pour traiter un signal infrarouge modulé sur porteur, qui comprend un signal porteur et un signal utile (211) modulé superposé sur le signal porteur, au moyen d'un circuit récepteur infrarouge (11, 111) dans lequel la fréquence du milieu de bande d'un filtre passe-bande (13, 113) est ajustée par un signal de cadence d'un générateur de cadence externe (31, 131).
